# EUROPEAN PATENT SPECIFICATION

(11) **EP 3 621 762 B1**
(45) Date of publication and mention of the grant of the patent: **07.07.2021**
(21) Application number: 18725005.5
(22) Date of filing: 04.05.2018
(51) Int. Cl.: B23D 45/12, B23D 21/04

(54) **ROTARY CUTTING DEVICE**
DREHSCHNEIDEVORRICHTUNG
DISPOSITIF DE COUPE ROTATIF

(30) Priority: 08.05.2017 NL 2018869
(43) Date of publication of application: 18.03.2020
(73) Proprietor: Verhuur- En Loonbedrijf Schuurman B.V., 1391 HA Abcoube (NL)
(72) Inventor: SCHUURMAN, Gerbrand Arjan, 1391 HA Abcoude (NL); SCHOONHOVEN, Barend Cornelis, 1391 JH Abcoude (NL)
(74) Representative: EP&C
(86) International application number: PCT/NL2018/050294
(87) International publication number: WO 2018/190722

(56) References cited:
- GB-A- 2 430 399

## Description

### Field of the invention

The present invention relates to a rotary cutting device as per the preamble of claim 1. Such a device is known from GB2430399A.

### Background of the invention

In the field of large pipelines which are entrenched in the ground, a need may occur to replace a section of the pipeline with a new section. A reason for a replacement or repair may be pipe corrosion, pipe burst, leakage, end of economic or technical life span, etc.. The pipeline may have a large diameter, e.g. 0,5 - 2 meter. Other diameters are also possible.

Since the pipeline is underground, the pipeline needs to be excavated by digging a hole in the ground. Then a cutting device needs to be positioned in the hole at the pipeline and the pipeline needs to be cut. This cutting operation generally requires manual labour because it is carried out in the hole. The operator needs to be positioned in the hole at the pipeline in order to properly cut the pipeline. The available space is generally quite small. It was recognized in the present invention that this cutting operation is quite cumbersome. Furthermore, it was recognized that the presence of an operator in the hole may be quite dangerous.

CN105855610 discloses a rotary cutting device having three rotary cutting blades. This device is suitable in a factory environment in which pipes are movable into the cutting device. However, if a pipeline is underground it cannot be moved and this rotary cutting device cannot be used.

CN105436599 discloses a rotary cutting device for relatively small tubes (4cm). The rotary cutting device comprises a frame which is positioned around the tube. The rotary cutting device has four of knives 5,10,15,20 which are configured to cut the tube. Hexagonal knobs 3,8,13,18 are provided. A wrench is used to rotate the knobs in order to rotate the rotary cutting device around the tube and cut the tube.

JP5798262 discloses a cutting device. The cutting device comprises two clamps on either side of the cutting blade. The clamps are driven and are configured to rotate the pipe. The cutting blade is stationary. During cutting the pipe is rotated over an angle of 360 degrees to make a circumferential cut. It was found that this device is not suitable for entrenched pipes, because an entrenched pipe is stationary and cannot be rotated.

GB2540289 discloses a handheld rotary cutting device for cutting relatively small tubes. The cutting device comprises handles 12,13 configured to be held in the hand of a user. The cutting device comprises three blade wheels 21. Two of the blade wheels are mounted on free ends of arms 14,15. The arms 14,15 are integrally connected with the handles 12,13 and are pivotable relative to one another via the central hinge 11. A third blade wheel 23 is mounted on a separate arm 22 which is pivotably mounted to the arm 15. The separate arm 22 can be pivoted to let the blade wheel 23 engage the pipe.

WO2013/005149A1 discloses a cutting device for cutting large diameter pipelines, in particular pipelines which are entrenched. The cutting device comprises cutting blades 70, 85 which are pinched together to cut through the pipe. A disadvantage of this device is that a clean cut is very difficult to achieve. Generally, the end of the pipeline which remains in the ground will deform extensively as a result of the cutting operation and will not be suitable for any further connections after the cutting operation. US2010/0043609 discloses a similar device.

GB2430399A discloses a pipe cutting machine for cutting pipelines under water. The pipe cutting machine has a U-shaped frame (called a first plate 6) and three rotary cutters mounted onto the frame. The U-shaped frame is rotatable relative to a second frame (called a second plate 7). GB2430399A comprises two clamps 10 for clamping the assembly onto a pipe which is to be cut. A disadvantage of the pipe cutting machine of GB2430399A is that it is difficult to align the pipe cutting machine with the pipe which is to be cut.

GB2430399A has a further disadvantage in that the opening of the U-shaped frame is very narrow. In situations in which the available space around the pipe which is to be cut is delimited, it is difficult to position the U-shaped frame around the pipe. This is in particular the case, but not limited to, pipes which are entrenched in the ground.

Furthermore, the pipe cutting machine of GB2430399 has only limited capabilities in terms of the diameter of pipes which can be cut. The diameter is limited to the opening defined by the first plate 6 and second plate 7.

It was recognized in the present invention that none of the documents in the prior art provide a rotary cutting device which satisfies the needs encountered with entrenched pipelines.

### Object of the invention

It is an object of the present invention to provide a rotary cutting device with which the cutting of an entrenched pipeline can be carried out more efficiently and with less risk to the operator who carries out the cutting operation.

It is a further object of the present invention to provide a rotary cutting device which is an alternative to the prior art.

It is a further object of the present invention to provide a rotary cutting device which allows the cutting of pipelines having a relatively wide range of diameters.

It is a further object of the present invention to provide a rotary cutting device which results in a lower risk of collision and damage when positioning the rotary cutting device on the pipeline.

### Summary of the invention

In order to achieve at least one object, the invention provides a rotary cutting device configured for cutting a stationary pipeline having a main pipe axis, in particular a pipeline entrenched in the ground, the rotary cutting device comprising:
- a support frame to which various parts of the rotary cutting device are mounted,
- a clamping assembly mounted to the support frame, the clamping assembly being configured for clamping the rotary cutting assembly to the pipeline in a fixed position and in a fixed orientation about the X, Y and Z-axis,
- a moveable circumferential support arm moveably connected to the support frame at an axial distance from the clamping assembly and being movable over a circumferential trajectory about a main longitudinal axis relative to the support frame, wherein the main longitudinal axis is aligned with the pipe axis,
wherein the support frame comprises a circumferential guide extending over a circumferential angle for guiding the circumferential support arm along its circumferential trajectory,
- a support arm drive configured to move the circumferential support arm relative to the support frame along its circumferential trajectory,
- a first pivotable cutting assembly comprising:
   ∘ a first pivotable arm which is connected via a first hinge at a first pivot point to the moveable circumferential support arm and which is pivotable about a first pivot axis relative to the moveable circumferential support arm,
   ∘ a first arm drive for pivoting the first pivotable arm relative to the moveable circumferential support arm between a retracted position and a cutting position,
   ∘ a first rotary cutting unit mounted to the first pivotable arm, the first rotary cutting unit comprising a first rotary blade and a first blade drive for rotating the first blade,
- a second pivotable cutting assembly comprising:
   ∘ a second pivotable arm which is connected via a second hinge at a second pivot point to the moveable circumferential support arm and which is pivotable about a second pivot axis relative to the moveable circumferential support arm,
   ∘ a second arm drive for pivoting the second pivotable arm relative to the moveable circumferential support arm between a retracted position and a cutting position,
   ∘ a second rotary cutting unit mounted to the second pivotable arm, the second rotary cutting unit comprising a second rotary blade and a second blade drive for rotating the second blade,
- a third pivotable cutting assembly comprising:
   ∘ a third pivotable arm which is connected via a third hinge at a third pivot point to the moveable circumferential support arm and which is pivotable about a third pivot axis relative to the moveable circumferential support arm, wherein the third pivot point is located between the first and second pivot point on the moveable circumferential support arm,
   ∘ a third arm drive for pivoting the third pivotable arm relative to the moveable circumferential support arm between a retracted position and a cutting position,
   ∘ a third rotary cutting unit mounted to the free end of the third pivotable arm, the third rotary cutting unit comprising a third rotary blade and a third blade drive for rotating the third blade,
wherein when the first and second pivotable arm are in the retracted position, an opening is defined which allows the rotary cutting device to be positioned against the pipeline and to be clamped against the pipeline with the clamping assembly,
wherein when the first and second arm are in the cutting position, the moveable circumferential support arm and the first and second pivotable arms define a C-shape around the pipeline,
wherein when the first, second arm and third arm are in the cutting position, the first, second and third cutting blade are spaced at circumferential intervals about the main longitudinal axis,
wherein the rotary cutting device is configured to, when the first second and third cutting blades are in the cutting position, move the moveable circumferential support arm in a circumferential direction along its circumferential trajectory, wherein during that movement each cutting blade is moved over a same circumferential angle, and wherein the first, second and third cutting blades make a 360 degree cut in the pipeline,
wherein the rotary cutting device is configured to be positioned against the pipeline by moving the rotary cutting device relative to the pipeline in an engagement direction (D),
**characterized in that** the first pivotable arm including the first rotary cutting unit and the second pivotable arm including the second rotary cutting unit extend over a distance beyond the free ends of the moveable circumferential support arm in the engagement direction (D).

With the invention, it is possible to cut stationary pipelines in a very effective manner. The operator does not need to carry out risky manoeuvres. A high quality cut can be made in a relatively short time period. The overall cutting operation is repeatable.

It was recognized in the present invention that it would be advantageous if the rotary cutting device could cut pipes having a relatively wide range of diameters. The rotary cutting device according to the present invention advantageously achieves this, because the opening is not limited by the circumferential guide or by the movable circumferential support arm or limited to a less extent. This allows the rotary cutting device to be positioned on a relatively wide range of pipeline diameters. For this reason, the rotary cutting device according to the present invention is an improvement over the pipe cutting machine of GB2430399 in which the diameter of the pipeline which is to be cut is limited to the relatively narrow opening defined by the first plate 6 and the second plate 7. For this reason, the pipe cutting machine of GB2430399 has only limited capabilities in terms of the diameter of pipes which can be cut.

It was further recognized in the present invention that the engagement of the pipeline by the rotary cutting device is critical, in particular in situations where limited space is available. This positioning should be not be hindered by parts of the device itself, or at least as little as possible, because this creates a risk of collision and consequently damage to the pipeline or to the rotary cutting device. In particular the moveable circumferential support arm should not hinder the positioning and engagement of the rotary cutting device with the pipeline. To this end the first pivotable arm including the first rotary cutting unit and the second pivotable arm including the second rotary cutting unit extend beyond the free ends of the moveable circumferential support arm in the engagement direction (D). This allows the moveable circumferential support arm and also a circumferential guide to be kept relatively short (or small).

Conversely, the pipe cutting device of GB2430399A has a disadvantage in this respect because both the first plate 6 and the second plate 7 define a narrow opening. In the pipe cutting device of GB2430399A, in the retracted position of the cutter blades 1, the opening is not defined by the retracted cutter blades but by the first plate 6 and the second plate 7. This makes it difficult to position the pipe cutting device of GB2430399A against the pipeline, and a risk of hitting and damaging the pipeline with the first plate 6 and the second plate 7 will occur. This is less of a problem underwater, which is the intended environment in which the pipe cutting device of GB2430399A is used.

In one preferred form of the invention, the moveable circumferential support arm, the first pivotable arm and the second pivotable arm together define a C-shape, both in the retracted position as in the cutting position, wherein the first rotary cutting unit and the second rotary cutting unit form the ends of the C-shape when viewed in the circumferential direction and define the opening of the C-shape. Both in the cutting position and in the retracted position of the first and second pivotable arms, the opening is not defined by the moveable circumferential support arm or by the circumferential guide. Because the opening of the C-shape is defined by the first rotary cutting unit and the second rotary cutting unit, the opening can be relatively large and is not limited by the moveable circumferential support arm or the circumferential guide as is the case in the pipe cutting machine of GB2430399A.

In one preferred form of the invention, wherein the clamping assembly comprises:
- at least two pivotable clamp arms which are connected to the support frame via respective clamp arms hinges, and
- an eye (95) or hook for suspending the rotary cutting device,
wherein in side view at least two pivotable clamp arms are positioned on an opposite side of the circumferential guide, the moveable circumferential support arm and the eye or hook as the first, second and third rotary cutting units.

This creates a rotary cutting device which has a centre of mass which - in side view - lies close to the circumferential guide and the moveable circumferential support arm. This makes it easier to maintain the rotary cutting device in a horizontal orientation when suspended from a crane, thereby improving the ease of positioning the rotary cutting device on a (horizontal) pipeline.

In a preferred embodiment, the clamping assembly comprises at least a first set and a second set of pivotable clamp arms, each of the first set and second set comprising at least two pivotable clamp arms which are connected to the support frame via respective clamp arms hinges, wherein a clamping shoe is mounted to a free end of each pivotable clamp arm, the clamping assembly comprising clamp actuators for pivoting the pivotable clamp arms relative to the main longitudinal axis over a radial distance between a retracted position and a gripping position in which the clamping shoes grip the pipeline, the clamp actuators being hydraulic or pneumatic cylinders or electric, pneumatic or hydraulic rotary drives, wherein the clamp arms of the first set are positioned at an axial distance (A2) from the clamp arms of the second set.

It was recognized that in order to precisely position the rotary cutting device on the pipeline which is to be cut and in order to precisely align the rotary cutting device with the pipeline which is to be cut, it is advantageous to provide at least four pivotable clamp arms, grouped in a first set and a second set. This allows the making of a cut in a plane which extends at right angles to the pipe axis. The pipe cutting machine of GB2430399A is not capable of such precise positioning because the pipe cutting machine of GB2430399A comprises only a single set of clamps, and because these clamps are not mounted on pivotable arms. This limited capability results in an inclined cut in the pipeline, i.e. a cut in a plane which is not at right angles to the pipeline axis.

In one preferred form of the invention, the moveable circumferential support arm is moveable in a circumferential direction about the main longitudinal axis over an angle of at least 100 degrees. The cutting blades have a certain diameter, and for this reason the angle can be somewhat less than 120 degrees in order to let the three cuts meet to form a single cut.

In another preferred form of the invention, when the first, second and third arm are in the cutting position, the first, second and third cutting blade are spaced at circumferential intervals of 100-140 degrees about the main longitudinal axis, and wherein in the cutting position of the first, second arm and third arm, wherein the first, second and third cutting blades are in particular equiangularly spaced about the circumference at angles of 120 degrees. It was found that this configuration is very effective.

In another preferred form of the invention, the first and second pivot points are located at opposite first and second free ends of the circumferential support arm, wherein the first and second cutting blades are mounted at respective free ends of the first and second pivotable arms, and wherein in the cutting position the third cutting blade has a central position relative to the first and second free end of the moveable circumferential support arm. This results in a simple and effective overall configuration.

In another preferred form of the invention, in the cutting position of the first and second arm, the free ends of the first and second arm do not meet and an opening remains of 10-120 degrees about the main longitudinal axis in the rotary cutting device, the opening being located opposite to the circumferential support arm.

In another preferred form of the invention, the clamping assembly comprises at least two pivotable clamp arms which are connected to the support frame via respective clamp arms hinges, wherein a clamping shoe is mounted to a free end of each pivotable clamp arm, the clamping assembly comprising clamp actuators for pivoting the pivotable clamp arms relative to the main longitudinal axis over a radial distance between a retracted position and a gripping position in which the clamping shoes grip the pipeline, the clamp actuators being hydraulic or pneumatic cylinders or electric, pneumatic or hydraulic rotary drives. This embodiment allows reliable clamping of the rotary cutting device with relatively few steps in the clamping procedure.

In another preferred form of the invention, the clamping assembly comprises at least a first set and second set of first and second clamping shoes which are positioned at an axial distance from one another, wherein the first and second set are in particular individually movable. This ensures in a simple and reliable way that the rotary cutting device is aligned with the pipeline axis.

In another preferred form of the invention, the clamping assembly comprises at least one top clamping shoe which is mounted to the frame via an adjustment mechanism for adjusting a position of the top clamping shoe relative to the support frame for different diameters of the pipeline. Advantageously, the same rotary cutting device can be used for different pipe diameters.

The present invention further relates to an assembly of a rotary cutting device according to any of the appended claims 1 to 10 and a lifting device, e.g. a crane, wherein the rotary cutting device comprises an eye or hook and is suspended from the crane via a line connected to the eye or hook. This allows a cost-effective overall operation.

In another variant, the present invention relates to an assembly of a rotary cutting device according to any of the appended claims 1 to 10 and a lifting device, wherein the opening is oriented sideways in order to position the rotary cutting device against the pipeline in a substantially horizontal direction. Sometimes, two pipeline extend adjacent one another with very little room between the two pipelines. In such a situation, the most effective way of positioning the rotary cutting assembly against the pipeline is to orient the rotary cutting device with the opening sideways and moving the rotary cutting device against the pipeline in a substantially horizontal manner. The lifting device may be a modified fork lift truck or bulldozer or a similar lifting device to which the rotary cutting device is mounted.

The present invention further relates to a assembly of a rotary cutting device according to any of the appended claims 1 to 10 and one or more separate sets of clamping shoes, the clamping shoes having a different curvature for clamping a pipeline of a different diameter.

The present invention further relates to a method of cutting a pipeline with the rotary cutting device according to any of the preceding claims, the method comprising:
- positioning the rotary cutting device at the pipeline, in particular by moving the rotary cutting device relative to the pipeline in an engagement direction (D)
- clamping the pipeline with the clamping assembly,
- pivoting the first and second pivotable arm to the cutting position in order to let the first and second cutting blade engage the pipeline, wherein the moveable circumferential support arm and the first and second pivotable arms define a C-shape around the pipeline,
- pivoting the third arm of the third pivotable cutting assembly to the cutting position in order to let the third cutting blade engage the pipeline,
- rotating the first, second and third cutting blade and making cuts through a wall of the pipeline,
- moving the moveable circumferential support arm in a circumferential direction over a circumferential angle relative to the cutting support frame and thereby extending the cuts in the pipeline until the cuts meets one another and result in a full circumferential cut,
- pivoting the first and second pivotable arms back to the retracted position, and pivoting the third arm back to the retracted position,
- rotating the circumferential support arm back to its initial position,
- releasing the clamping assembly from the pipeline,
- removing the rotary cutting device from the pipeline.

The method provides substantially the same advantages as the rotary cutting device according to the invention.

In one preferred form of the method, the rotary cutting device is suspended from a crane, the method comprising lowering the rotary cutting device on the pipeline. In another variant, the opening is oriented sideways and the rotary cutting device is positioned against the pipeline in a substantially horizontal direction.

In another preferred form of the method, the first, second and third cutting blade are substantially equiangularly spaced about the main longitudinal axis, and wherein the circumferential support arm is rotated over an angle of at least 120 degrees during the cutting.

### Short description of the figures

The previous and other features and advantages of the present invention will be more fully understood from the following detailed description of exemplary embodiment with reference to the attached drawing.
Figure 1 shows an isometric view of a rotary cutting device according to the invention from a front side.
Figure 2 shows an isometric view of the rotary cutting device according to the invention from a rear side.
Figure 3 shows a side view of the rotary cutting device according to the invention in operation.
Figures 4A, 4B, 4C,and 4D show schematic front views of the working of the rotary cutting device according to the invention.
Figures 5A and 5B show schematic front views of the working of the circumferential support arm, the circumferential guide and the support arm drive.
Figure 6 shows a schematic rear view of the clamping assembly of the rotary cutting device according to the invention.

### Detailed description of the figures

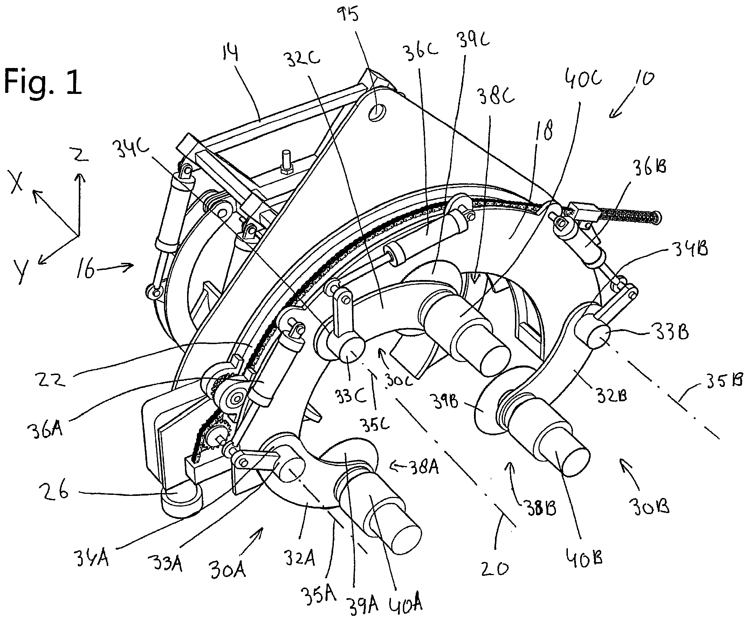

Turning to figures 1, 2 and 3, the rotary cutting device 10 according to the invention is shown. The rotary cutting device 10 is configured for cutting a stationary pipeline 12 having a main pipe axis 13. The rotary cutting device 10 is particular intended to cut a pipeline which is entrenched in the ground and which cannot be moved.

The rotary cutting device 10 comprises a support frame 14 to which various parts of the rotary cutting device are mounted. The rotary cutting device comprises a clamping assembly 16 mounted to the support frame. The clamping assembly is configured for clamping the rotary cutting assembly to the pipeline in a fixed position and in a fixed orientation about the X, Y and Z-axis.

The rotary cutting device 10 comprises a moveable circumferential support arm 18 which is moveably connected to the support frame at an axial distance A1 from the clamping assembly 16. The axial distance A1 may be less than 2 meter. The moveable circumferential support arm 18 is movable over a circumferential trajectory 24 (discussed further below) about a main longitudinal axis 20 relative to the support frame. The main longitudinal axis 20 is aligned with the pipe axis 13.

The support frame comprises a circumferential guide 22 extending over a circumferential angle for guiding the circumferential support arm along its circumferential trajectory 24.

A support arm drive 26 is mounted to the circumferential support arm and is configured to move the circumferential support arm 18 relative to the support frame along its circumferential trajectory.

The rotary cutting device 10 comprises a first pivotable cutting assembly 30A comprising:
∘ a first pivotable arm 32A which is connected via a first hinge 33A at a first pivot point 34A to the moveable circumferential support arm and which is pivotable about a first pivot axis 35A relative to the moveable circumferential support arm,
∘ a first arm drive 36A for pivoting the first pivotable arm relative to the moveable circumferential support arm 18 between a retracted position and a cutting position,
∘ a first rotary cutting unit 38A mounted to the first pivotable arm, the first rotary cutting unit comprising a first rotary blade 39A and a first blade drive 40A for rotating the first blade. The first rotary cutting unit is preferably mounted to the free end of the first pivotable arm.

It is noted that the first rotary cutting unit 38A was called a first rotary cutting *device* 38A in the priority document, but was renamed into a first rotary cutting *unit* for the sole reason of avoiding possible confusion with the rotary cutting device 10. The same applies to the second a third rotary cutting units 38B, 38C, mutatis mutandis.

The rotary cutting device 10 comprises a second pivotable cutting assembly 30B comprising:
∘ a second pivotable arm 32B which is connected via a second hinge 33B at a second pivot point 34B to the moveable circumferential support arm and which is pivotable about a second pivot axis 35B relative to the moveable circumferential support arm,
∘ a second arm drive 36B for pivoting the second pivotable arm relative to the moveable circumferential support arm 18 between a retracted position and a cutting position,
∘ a second rotary cutting unit 38B mounted to the second pivotable arm, the second rotary cutting unit comprising a second rotary blade 39B and a second blade drive 40B for rotating the second blade. The second rotary cutting unit is preferably mounted to the free end of the second pivotable arm.

The rotary cutting device 10 comprises a third pivotable cutting assembly 30C comprising:
∘ a third pivotable arm 32C which is connected via a third hinge 33C at a third pivot point 34C to the moveable circumferential support arm and which is pivotable about a third pivot axis 35C relative to the moveable circumferential support arm, wherein the third pivot point is located between the first and second pivot point on the moveable circumferential support arm,
∘ a third arm drive 36C for pivoting the third pivotable arm relative to the moveable circumferential support arm 18 between a retracted position and a cutting position,
∘ a third rotary cutting unit 38C mounted to the free end of the third pivotable arm, the third rotary cutting unit comprising a third rotary blade 39C and a third blade drive 40C for rotating the third blade.

The first, second and third arm drives 36A, 36B, 36C are shown as hydraulic cylinders, but the skilled person will understand that different drives are possible. The first, second and third blade drives 40A, 40B, 40C may be electric or hydraulic motors.

The cutting blades 39 may be metal cutting blades provides with cutting teeth of diamond. The teeth may also be from hardened steel, or from any hard material.

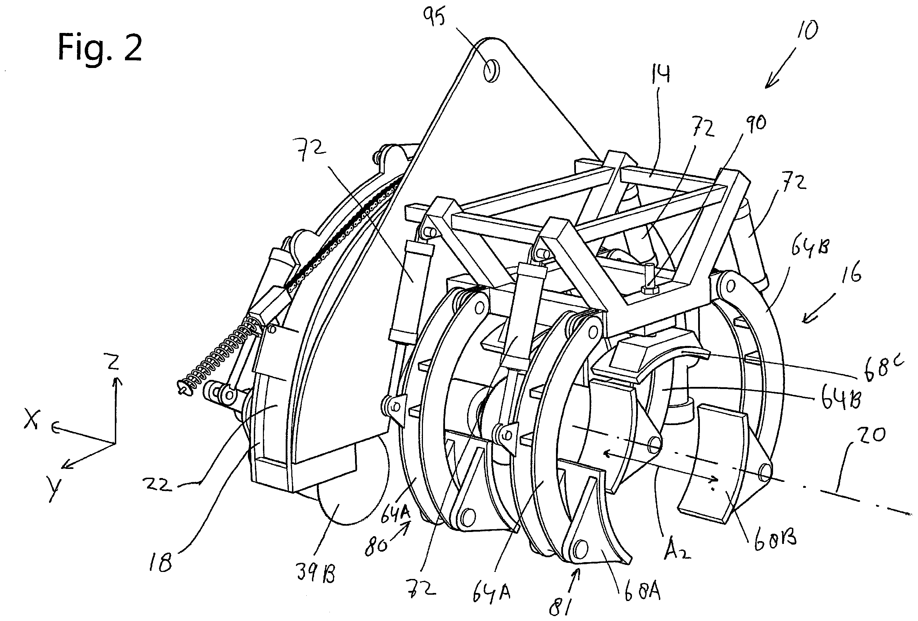

The main longitudinal axis 20 in figure 2 accidentally coincides with the third pivot axis, but the skilled person will understand that this is a matter of perspective. The first, second and third pivot axis 35A, 35B, 35C may extend parallel to the main longitudinal axis 20, but different arrangements are possible.

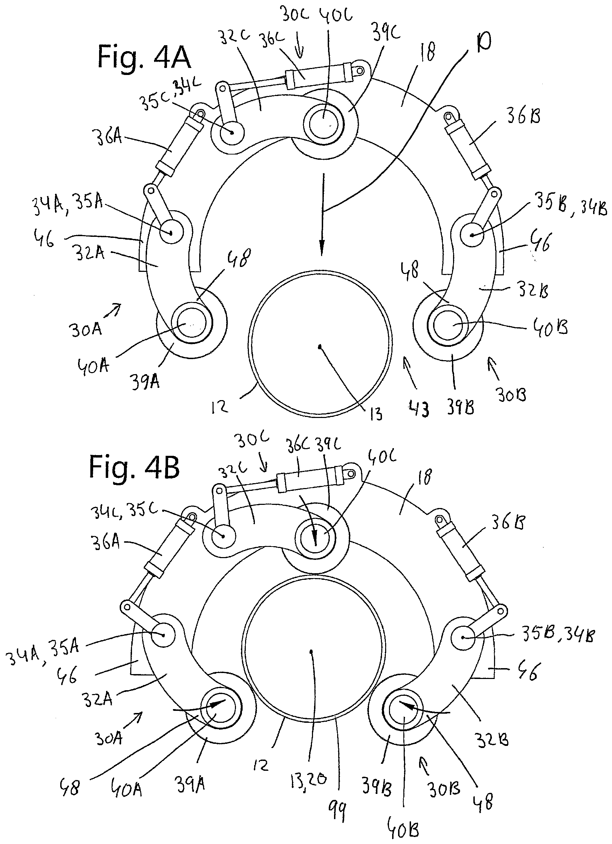

Turning to figure 4A, when the first and second pivotable arm 32A, 32B are in the retracted position, an opening 43 is defined which allows the rotary cutting device to be positioned against the pipeline 12 and to be clamped against the pipeline with the clamping assembly.

The rotary cutting device 10 is configured to be positioned against the pipeline by moving the rotary cutting device 10 relative to the pipeline in an engagement direction D. As is shown in fig. 4A, the first pivotable arm 32A including the first rotary cutting unit 38A and the second pivotable arm 32B including the second rotary cutting unit 38B extend over a distance beyond the free ends 46 of the moveable circumferential support arm 18 in the engagement direction D. This advantageously creates a relatively wide opening, not obstructed or at least to a lesser extent obstructed by the moveable circumferential support arm 18. When the opening 43 faces downward as shown in figures 2, 4A and 4B, the engagement direction D will be directed downward and the first pivotable arm 32A including the first rotary cutting unit 38A and the second pivotable arm 32B including the second rotary cutting unit 38B extend downward beyond the free ends 46.

As is also clear from fig. 4A, the moveable circumferential support arm 18, the first pivotable arm 32A and the second pivotable arm 32B together define a C-shape, wherein the first rotary cutting unit 38A and the second rotary cutting unit 38B form ends of the C-shape when viewed in the circumferential direction. Both in the cutting position and in the retracted position of the first and second pivotable arms 32A, 32B the opening 43 is not defined by the moveable circumferential support arm 18 or by the circumferential guide 22.

Turning to figure 4B, when the first and second arm are in the cutting position, the moveable circumferential support arm and the first and second pivotable arms define a C-shape around the pipeline. When the first, second arm and third pivotable arms 32A, 32B, 32C are in the cutting position, the first, second and third cutting blade 39A, 39B, 39C are spaced at circumferential intervals about the main longitudinal axis 20.

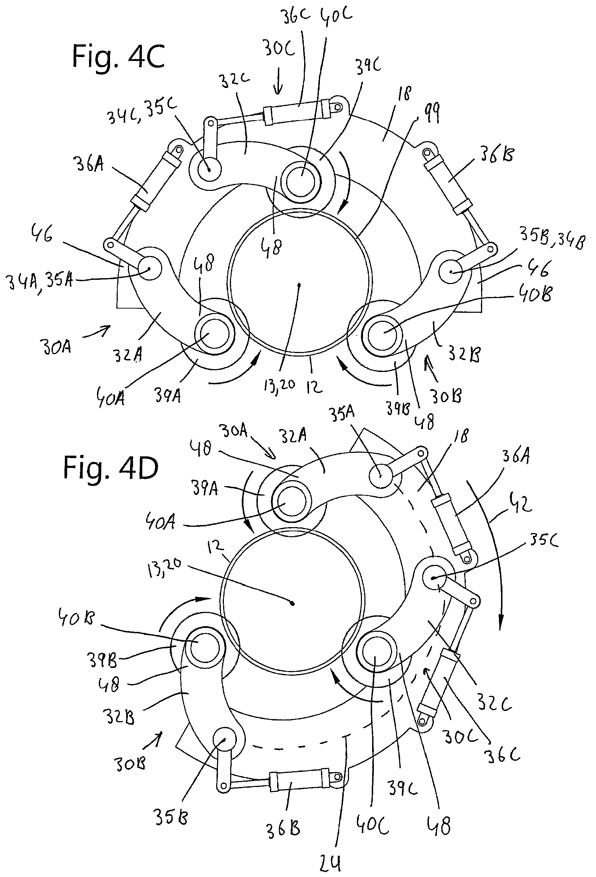

Turning to figures 4C and 4D, the rotary cutting device 10 is configured to, when the first, second and third cutting blades 39A, 39B, 39C are in the cutting position, move the moveable circumferential support arm 18 in a circumferential direction 42 along its circumferential trajectory 24 (shown in dashed lines). During that circumferential movement each cutting blade is moved over a same circumferential angle, and the first, second and third cutting blades make a 360 degree cut in the pipeline.

During the circumferential movement of the circumferential support arm 18, the three pivotable cutting assemblies 30A, 30B, 30C, move with the circumferential support arm 18.

The moveable circumferential support arm 18 is moveable in a circumferential direction about the main longitudinal axis over an angle of at least 120 degrees. With three cutting assemblies 30A, 30B, 30C which are spaced at 120 degrees this results in a complete cut.

When the first, second and third arm are in the cutting position, the first, second and third cutting blade are spaced at circumferential intervals of 100-140 degrees about the main longitudinal axis, and wherein in the cutting position of the first, second and third arm, wherein the first, second and third cutting blades are in particular equiangularly spaced about the circumference at angles of 120 degrees.

The first and second pivot points 34A, 34B are located at opposite first and second free ends 46 of the circumferential support arm, wherein the first and second cutting blades are mounted at respective free ends 48 of the first and second pivotable arms, and wherein in the cutting position the third cutting blade has a central position relative to the first and second free end 46 of the moveable circumferential support arm.

In the cutting position of the first and second arm, the free ends of the first and second arms do not meet and an opening remains of about 100-120 degrees about the main longitudinal axis in the rotary cutting device, the opening being located opposite to the circumferential support arm.

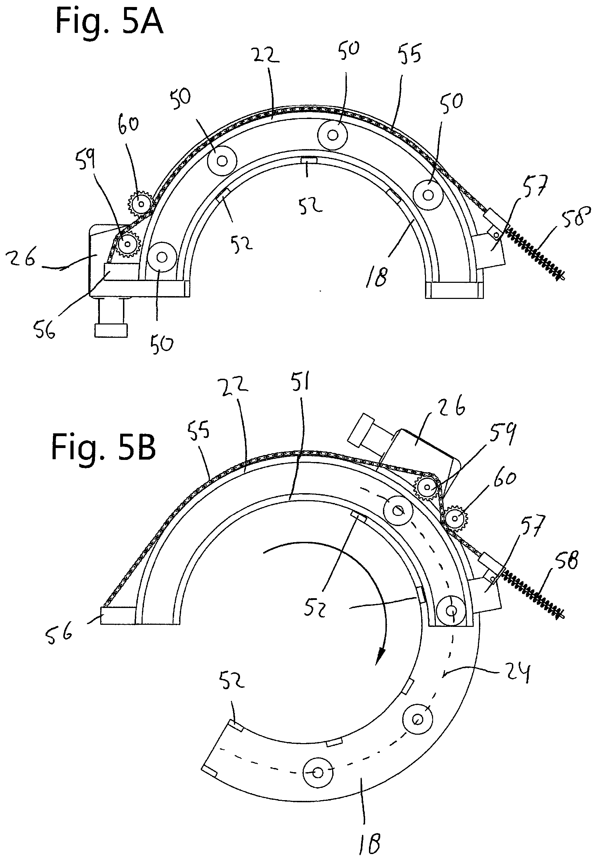

Turning to figures 5A and 5B, the circumferential support arm 18 and the circumferential guide 22 are shown. The circumferential guide 22 is mounted to the support frame 14 in a fixed manner and may be a curved beam. The circumferential support arm 18 comprises rollers 50 which roll over a flange 51 of the circumferential guide 22. Sliding elements 52 may be provided to ensure that the degree of freedom of the circumferential support arm 18 is limited to a circumferential movement.

A chain 55 is mounted to the circumferential guide 22 at a first mounting position 56 and a second mounting position 57. A spring 58 is provided to maintain the chain 55 under tension. The chain 55 acts as a rack. The support arm drive 26 is mounted to the circumferential support arm 18. The support arm drive may be a hydraulic or electric motor. The support arm drive acts on the chain 55 via a driven gear 59. A non-driven gear 60 keeps the chain against the circumferential guide 22. The chain 55 runs underneath the non-driven gear 60 and over the drive gear 59. When the driven gear 59 rotates, the circumferential support arm 18 moves along its circumferential trajectory.

The skilled person will understand that another setup of the drive is also possible. For instance a rack may be used instead of the chain 55.

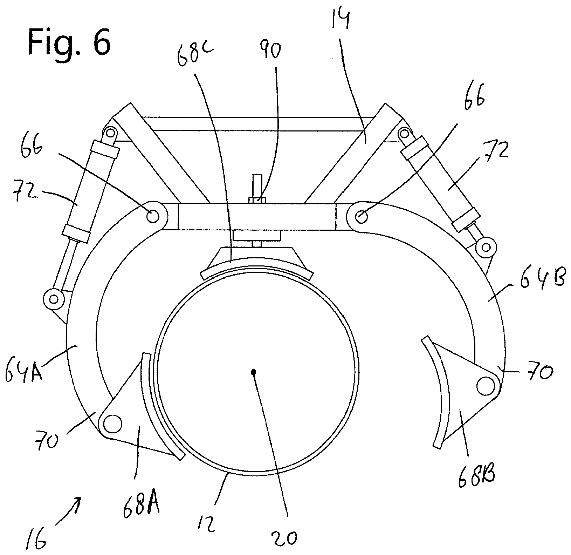

Turning to figures 2, 3 and 6, the clamping assembly 16 comprises at least two pivotable clamp arms 64 which are connected to the support frame 14 via respective clamp arms hinges 66. Respective first and second clamping shoes 68A, 68B are mounted to a free end 70 of each pivotable clamp arm 64. The clamping shoes are pivotably mounted to the pivotable clamp arms. The clamping assembly 16 comprises clamp actuators 72 for pivoting the pivotable clamp arms 66 relative to the main longitudinal axis 20 over a radial distance between a retracted position and a gripping position in which the clamping shoes grip the pipeline. The clamp actuators 72 may be hydraulic or pneumatic cylinders or electric, pneumatic or hydraulic rotary drives. The clamping shoes have a curved surface which matches the curved surface of the pipeline wall 99.

The clamping assembly 16 may comprise at least a first set 80 and a second set 81, each set comprising a first and second pivotable clamp arm 64A, 64B which are connected to the support frame via respective clamp arms hinges 66 and the associated first and second clamping shoes 68A, 68B. The first and second set 80, 81 are positioned at an axial distance A2 from one another. The axial distance A2 allow a précising positioning and alignment of the rotary pipe cutting device with the main axis of the pipeline which is to be cut.

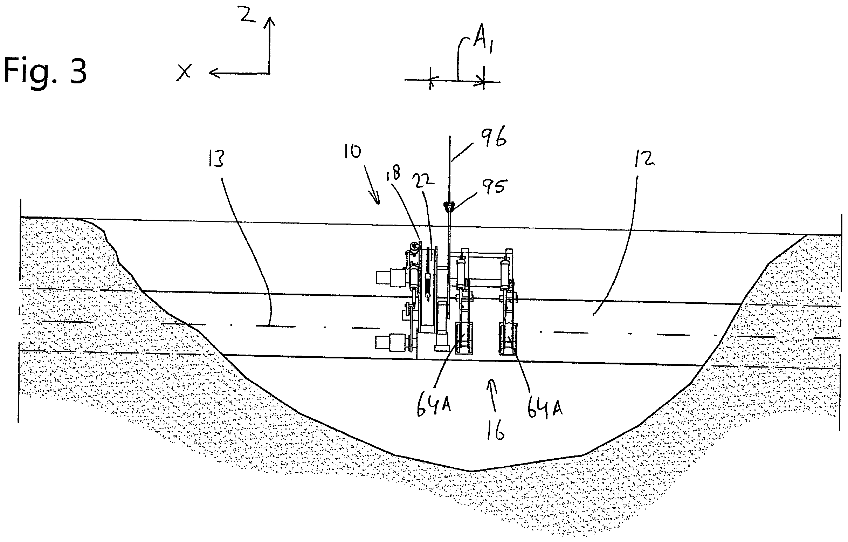

With particular reference to the side view of fig. 3, the clamping assembly 16 comprises:
- at least two pivotable clamp arms 64 which are connected to the support frame via respective clamp arms hinges 66, and
- an eye 95 or hook for suspending the rotary cutting device.

In side view, at least two pivotable clamp arms 64 are positioned on an opposite side of the circumferential guide 22, the moveable circumferential support arm 18 and the eye or hook 95 as the first, second and third rotary cutting units 38A, 38B, 38C.

A clamping shoe 68A, 68B is mounted to a free end 70 of each pivotable clamp arm, the clamping assembly comprising clamp actuators 72 for pivoting the pivotable clamp arms relative to the main longitudinal axis over a radial distance between a retracted position and a gripping position in which the clamping shoes grip the pipeline.

In an embodiment, the shoes 68 of the first and second set 80, 81 may in particular be individually movable. However, in an alternative embodiment the shoes on each side may be interconnected, either directly or via the associated arms, so that they move together. Each clamping shoe may be connected to a respective arm.

The clamping assembly comprises at least one top clamping shoe 68C which is mounted to the frame 14 via an adjustment mechanism 90 for adjusting a position of the top clamping shoe 68C relative to the support frame for different diameters of the pipeline.

It is noted that different arrangements of the clamping assembly are possible. For instance one or more chains or ropes may be wrapped around the pipeline in a tight manner for clamping the rotary cutting device to the pipeline. In such an embodiment, the clamping assembly would comprise eyes or hooks attached to the frame 14 and the chain or rope would run through these eyes or hooks. The chain or rope would be put under considerable tension to achieve the desired clamping force.

The present invention further relates to an assembly of a rotary cutting device 10 according to the invention and a lifting device such as a crane, wherein the rotary cutting device 10 comprises an eye 95 or hook and is suspended from the crane via a line 96 connected to the eye or hook. The lifting device may be a motorized vehicle, e.g. a truck, tractor or a forklift. It is noted that the present invention is also very suitable for cutting stationery pipelines which are above the ground.

The invention further relates to an assembly of a rotary cutting device 10 according to the invention and one or more separate sets of clamping shoes, the clamping shoes having a different curvature for clamping a pipeline of a different diameter.

The present invention further relates to a method of cutting a pipeline 12 with the rotary cutting device 10 according to the invention. The method comprises positioning the rotary cutting device at the pipeline. If the rotary cutting device is suspended from a lifting device such as a crane, the method may comprises lowering the rotary cutting device on the pipeline.

Next, the pipeline is clamped with the clamping assembly by pivoting the clamp arms 64 inward and firmly gripping the pipeline.

Next, the first and second pivotable arm 32A, 32B are pivoted to the cutting position in order to let the first and second cutting blade engage the pipeline. The moveable circumferential support arm 18 and the first and second pivotable arms define a C-shape around the pipeline. Next the third arm 32C of the third pivotable cutting assembly 30C is pivoted to the cutting position in order to let the third cutting blade engage the pipeline.

Next, the first, second and third cutting blade 39A, 39B, 39C start to rotate and make cuts through the wall 99 of the pipeline.

Next, the moveable circumferential support arm 18 is moved in a circumferential direction 42 over a circumferential angle along the circumferential trajectory 24 relative to the cutting support frame. In this manner, the cuts in the pipeline are extended until the cuts meet one another and result in a full circumferential cut. The circumferential support arm 18 may be rotated over an angle of at least 120 degrees during the cutting.

Next the first and second pivotable arms are pivoted back to the retracted position. Next, the third arm is moved back to the retracted position. The circumferential support arm 18 is then rotated back to its initial position. The clamping assembly is released from the pipeline and the rotary cutting device is removed from the pipeline.

The device according to the present invention can be lowered from above onto the pipeline. Therefore, the required space on a left and right side of the pipeline is relatively small which provides a significant advantage .

The rotary cutting device may be lowered onto a pipeline in a vertical direction. In another embodiment, the rotary cutting device is oriented sideways and may be positioned around a pipeline in a horizontal direction.

## Claims

1. Rotary cutting device (10) configured for cutting a stationary pipeline (12) having a main pipe axis (13), in particular a pipeline entrenched in the ground, the rotary cutting device comprising:
- a support frame (14) to which various parts of the rotary cutting device are mounted,
- a clamping assembly (16) mounted to the support frame, the clamping assembly being configured for clamping the rotary cutting assembly to the pipeline in a fixed position and in a fixed orientation about the X, Y and Z-axis,
- a moveable circumferential support arm (18) moveably connected to the support frame at an axial distance (A1) from the clamping assembly and being movable over a circumferential trajectory about a main longitudinal axis (20) relative to the support frame, wherein the main longitudinal axis is aligned with the pipe axis, wherein the support frame comprises a circumferential guide (22) extending over a circumferential angle for guiding the circumferential support arm along its circumferential trajectory,
- a support arm drive (26) configured to move the circumferential support arm relative to the support frame along its circumferential trajectory,
- a first pivotable cutting assembly (30A) comprising:
o a first pivotable arm (32A) which is connected via a first hinge (33A) at a first pivot point (34A) to the moveable circumferential support arm and which is pivotable about a first pivot axis (35A) relative to the moveable circumferential support arm,
o a first arm drive (36A) for pivoting the first pivotable arm relative to the moveable circumferential support arm (18) between a retracted position and a cutting position,
o a first rotary cutting unit (38A) mounted to the first pivotable arm, the first rotary cutting unit comprising a first rotary blade (39A) and a first blade drive (40A) for rotating the first blade,
- a second pivotable cutting assembly (30B) comprising:
∘ a second pivotable arm (32B) which is connected via a second hinge (33B) at a second pivot point (34B) to the moveable circumferential support arm and which is pivotable about a second pivot axis (35B) relative to the moveable circumferential support arm,
∘ a second arm drive (36B) for pivoting the second pivotable arm relative to the moveable circumferential support arm (18) between a retracted position and a cutting position,
∘ a second rotary cutting unit (38B) mounted to the second pivotable arm, the second rotary cutting unit comprising a second rotary blade (39B) and a second blade drive (40B) for rotating the second blade,
- a third pivotable cutting assembly (30C) comprising:
∘ a third pivotable arm (32C) which is connected via a third hinge (33C) at a third pivot point (34C) to the moveable circumferential support arm and which is pivotable about a third pivot axis (35C) relative to the moveable circumferential support arm, wherein the third pivot point is located between the first and second pivot point on the moveable circumferential support arm,
∘ a third arm drive (36C) for pivoting the third pivotable arm relative to the moveable circumferential support arm (18) between a retracted position and a cutting position,
∘ a third rotary cutting unit (38C) mounted to the free end of the third pivotable arm, the third rotary cutting unit comprising a third rotary blade (39C) and a third blade drive (40C) for rotating the third blade,
wherein when the first and second pivotable arm are in the retracted position, an opening (43) is defined which allows the rotary cutting device to be positioned against the pipeline and to be clamped against the pipeline with the clamping assembly,
wherein when the first and second arm are in the cutting position, the moveable circumferential support arm and the first and second pivotable arms define a C-shape around the pipeline,
wherein when the first, second and third arm are in the cutting position, the first, second and third cutting blade are spaced at circumferential intervals about the main longitudinal axis,
wherein the rotary cutting device is configured to, when the first, second and third cutting blades are in the cutting position, move the moveable circumferential support arm in a circumferential direction along its circumferential trajectory, wherein during that movement each cutting blade is moved over a same circumferential angle, and wherein the first, second and third cutting blades make a 360 degree cut in the pipeline,
wherein the rotary cutting device (10) is configured to be positioned against the pipeline by moving the rotary cutting device (10) relative to the pipeline in an engagement direction (D),
**characterized in that** the first pivotable arm (32A) including the first rotary cutting unit (38A) and the second pivotable arm (32B) including the second rotary cutting unit (38B) extend over a distance beyond the free ends (46) of the moveable circumferential support arm (18) in the engagement direction (D).

2. Rotary cutting device (10) according to claim 1, wherein the moveable circumferential support arm (18), the first pivotable arm (32A) and the second pivotable arm (32B) define a C-shape, wherein the first rotary cutting unit (38A) and the second rotary cutting unit (38B) form ends of the C-shape when viewed in the circumferential direction.

3. Rotary cutting device (10) according to claim 1 or 2, wherein both in the cutting position and in the retracted position of the first and second pivotable arms (32A, 32B) the opening (43) is not defined by the moveable circumferential support arm (18) or by the circumferential guide (22).

4. Rotary cutting device (10) according to any of the preceding claims, wherein the clamping assembly comprises:
- at least two pivotable clamp arms (64) which are connected to the support frame via respective clamp arms hinges (66), and
- an eye (95) or hook for suspending the rotary cutting device,
wherein in side view at least two pivotable clamp arms (64) are positioned on an opposite side of the circumferential guide (22), the moveable circumferential support arm (18) and the eye or hook (95) as the first, second and third rotary cutting units (38A, 38B, 38C).

5. Rotary cutting device (10) according to any of the preceding claims, wherein the clamping assembly (16) comprises at least a first set (80) and a second set (81) of pivotable clamp arms (64), each of the first set (80) and second set (81) comprising at least two pivotable clamp arms (64) which are connected to the support frame via respective clamp arms hinges (66),
wherein a clamping shoe (68A, 68B) is mounted to a free end (70) of each pivotable clamp arm, the clamping assembly comprising clamp actuators (72) for pivoting the pivotable clamp arms relative to the main longitudinal axis over a radial distance between a retracted position and a gripping position in which the clamping shoes grip the pipeline, the clamp actuators being hydraulic or pneumatic cylinders or electric, pneumatic or hydraulic rotary drives,
wherein the clamp arms (64) of the first set (80) are positioned at an axial distance (A2) from the clamp arms (64) of the second set (81).

6. Rotary cutting device according to any of the preceding claims, wherein the moveable circumferential support arm is moveable in a circumferential direction about the main longitudinal axis over an angle of at least 100 degrees.

7. Rotary cutting device according to any of the preceding claims, wherein the first and second pivot points are located at opposite first and second free ends (46) of the circumferential support arm, wherein the first and second cutting blades are mounted at respective free ends (48) of the first and second pivotable arms, and wherein in the cutting position the third cutting blade has a central position relative to the first and second free end (46) of the moveable circumferential support arm (18).

8. Rotary cutting device according to any of the preceding claims, wherein in the cutting position of the first and second arm, the free ends of the first and second arms do not meet and an opening remains of 10-120 degrees about the main longitudinal axis in the rotary cutting device, the opening being located opposite to the circumferential support arm.

9. Rotary cutting device according to any of the preceding claims, wherein the clamping assembly comprises at least two pivotable clamp arms (64) which are connected to the support frame via respective clamp arms hinges (66), wherein a clamping shoe (68A, 68B) is mounted to a free end (70) of each pivotable clamp arm, the clamping assembly comprising clamp actuators (72) for pivoting the pivotable clamp arms relative to the main longitudinal axis over a radial distance between a retracted position and a gripping position in which the clamping shoes grip the pipeline, the clamp actuators being hydraulic or pneumatic cylinders or electric, pneumatic or hydraulic rotary drives.

10. Rotary cutting device according to any of the preceding claims, wherein the clamping assembly comprises at least one top clamping shoe (68C) which is mounted to the frame via an adjustment mechanism (90) for adjusting a position of the top clamping shoe relative to the support frame for different diameters of the pipeline.

11. Assembly of a rotary cutting device according to any of the preceding claims and a lifting device, e.g. a crane, wherein the rotary cutting device comprises an eye (95) or hook and is suspended from the crane via a line (96) connected to the eye or hook.

12. Assembly of a rotary cutting device according to any of the preceding claims and one or more separate sets of clamping shoes, the clamping shoes having a different curvature for clamping a pipeline of a different diameter.

13. Method of cutting a pipeline with the rotary cutting device according to any of the preceding claims, the method comprising:
- positioning the rotary cutting device (10) at the pipeline, in particular by moving the rotary cutting device in an engagement direction (D) relative to the pipeline,
- clamping the pipeline with the clamping assembly (16),
- pivoting the first and second pivotable arm to the cutting position in order to let the first and second cutting blade engage the pipeline, wherein the moveable circumferential support arm and the first and second pivotable arms define a C-shape around the pipeline,
- pivoting the third arm of the third pivotable cutting assembly (30C) to the cutting position in order to let the third cutting blade engage the pipeline,
- rotating the first, second and third cutting blade and making cuts through a wall (99) of the pipeline,
- moving the moveable circumferential support arm (18) in a circumferential direction over a circumferential angle relative to the support frame along the circumferential trajectory and thereby extending the cuts in the pipeline until the cuts meet one another and result in a full circumferential cut,
- pivoting the first and second pivotable arms back to the retracted position, and pivoting the third arm back to the retracted position,
- rotating the circumferential support arm (18) back to its initial position,
- releasing the clamping assembly from the pipeline,
- removing the rotary cutting device from the pipeline.

14. Method according to claim 13, wherein the rotary cutting device is suspended from a crane, the method comprising lowering the rotary cutting device on the pipeline.

15. Method according to any of claims 13 and 14, wherein the first, second and third cutting blade are substantially equiangularly spaced about the main longitudinal axis, and wherein the circumferential support arm is rotated over an angle of at least 120 degrees during the cutting.

## Patentansprüche

1. Drehschneidevorrichtung (10), eingerichtet zum Schneiden einer stationären Rohrleitung (12) mit einer Hauptrohrachse (13), insbesondere einer im Boden verankerten Rohrleitung, wobei die Drehschneidevorrichtung umfasst:
- einen Stützrahmen (14), an dem verschiedene Teile der Drehschneidevorrichtung angebracht sind,
- eine an dem Stützrahmen angebrachte Klemmanordnung (16), die zum Festklemmen der Drehschneidevorrichtung an der Rohrleitung in einer festen Position und in einer festen Ausrichtung um die X-, Y- und Z-Achse eingerichtet ist,
- einen bewegbaren Umfangs-Stützarm (18), der mit dem Stützrahmen in einem axialen Abstand (A1) von der Klemmanordnung bewegbar verbunden ist und über eine Umfangsbahn um eine Hauptlängsachse (20) relativ zu dem Stützrahmen bewegbar ist, wobei die Hauptlängsachse mit der Rohrachse fluchtet,
wobei der Stützrahmen eine sich über einen Umfangswinkel erstreckende Umfangsführung (22) zum Führen des Umfangs-Stützarms entlang seiner Umfangsbahn umfasst,
- einen Stützarmantrieb (26), der eingerichtet ist, um den Umfangs-Stützarm relativ zu dem Stützrahmen entlang seiner Umfangsbahn zu bewegen,
- eine erste schwenkbare Schneidanordnung (30A), umfassend:
∘ einen ersten schwenkbaren Arm (32A), der über ein erstes Gelenk (33A) an einem ersten Schwenkpunkt (34A) mit dem bewegbaren Umfangs-Stützarm verbunden ist und der um eine erste Schwenkachse (35A) relativ zu dem bewegbaren Umfangs-Stützarm schwenkbar ist,
∘ einen ersten Armantrieb (36A) zum Schwenken des ersten schwenkbaren Arms relativ zu dem bewegbaren Umfangs-Stützarm (18) zwischen einer eingefahrenen Position und einer Schneideposition,
∘ eine erste Drehschneideinheit (38A), die an dem ersten schwenkbaren Arm angebracht ist, wobei die erste Drehschneideinheit ein erstes Drehmesser (39A) und einen ersten Messerantrieb (40A) zum Drehen des ersten Messers umfasst,
- eine zweite schwenkbare Schneidanordnung (30B), umfassend:
∘ einen zweiten schwenkbaren Arm (32B), der über ein zweites Gelenk (33B) an einem zweiten Schwenkpunkt (34B) mit dem bewegbaren Umfangs-Stützarm verbunden ist und der um eine zweite Schwenkachse (35B) relativ zu dem bewegbaren Umfangs-Stützarm schwenkbar ist,
∘ einen zweiten Armantrieb (36B) zum Schwenken des zweiten schwenkbaren Arms relativ zu dem bewegbaren Umfangs-Stützarm (18) zwischen einer eingefahrenen Position und einer Schneideposition,
∘ eine zweite Drehschneideinheit (38B), die an dem zweiten schwenkbaren Arm angebracht ist, wobei die zweite Drehschneideinheit ein zweites Drehmesser (39B) und einen zweiten Messerantrieb (40B) zum Drehen des zweiten Messers umfasst,
- eine dritte schwenkbare Schneidanordnung (30C) umfassend:
∘ einen dritten schwenkbaren Arm (32C), der über ein drittes Gelenk (33C) an einem dritten Schwenkpunkt (34C) mit dem bewegbaren Umfangs-Stützarm verbunden ist und der um eine dritte Schwenkachse (35C) relativ zu dem bewegbaren Umfangs-Stützarm schwenkbar ist, wobei der dritte Schwenkpunkt zwischen dem ersten und dem zweiten Schwenkpunkt an dem bewegbaren Umfangs-Stützarm angeordnet ist,
∘ einen dritten Armantrieb (36C) zum Schwenken des dritten schwenkbaren Arms relativ zu dem bewegbaren Umfangs-Stützarm (18) zwischen einer eingefahrenen Position und einer Schneideposition,
∘ eine dritte Drehschneideeinheit (38C), die an dem freien Ende des dritten schwenkbaren Arms angebracht ist, wobei die dritte Drehschneideeinheit ein drittes Drehmesser (39C) und einen dritten Messerantrieb (40C) zum Drehen des dritten Messers umfasst,
wobei, wenn der erste und der zweite schwenkbare Arm in der eingefahrenen Position sind, eine Öffnung (43) definiert ist, die es ermöglicht, dass die Drehschneidevorrichtung gegen die Rohrleitung positioniert wird und mit der Klemmanordnung an der Rohrleitung festgeklemmt wird,
wobei, wenn der erste und der zweite Arm in der Schneideposition sind, der bewegbare Umfangs-Stützarm und der erste und der zweite schwenkbare Arm eine C-Form um die Rohrleitung herum definieren,
wobei, wenn der erste, der zweite und der dritte Arm in der Schneideposition sind, das erste, das zweite und das dritte Schneidemesser in umlaufenden Intervallen um die Hauptlängsachse herum beabstandet sind,
wobei die Drehschneidevorrichtung eingerichtet ist, den bewegbaren Umfangs-Stützarm, wenn das erste, das zweite und das dritte Schneidemesser in der Schneideposition sind, in einer Umfangsrichtung entlang seiner Umfangsbahn zu bewegen, wobei während dieser Bewegung jedes Schneidemesser über einen gleichen Umfangswinkel bewegt wird, und wobei das erste, das zweite und das dritte Schneidemesser einen 360-Grad-Schnitt in der Rohrleitung ausführen,
wobei die Drehschneidevorrichtung (10) eingerichtet ist, gegen die Rohrleitung positioniert zu werden, indem die Drehschneidevorrichtung (10) relativ zu der Rohrleitung in einer Eingriffsrichtung (D) bewegt wird,
**dadurch gekennzeichnet, dass** der erste schwenkbare Arm (32A), der die erste Drehschneideeinheit (38A) aufweist, und der zweite schwenkbare Arm (32B), der die zweite Drehschneideeinheit (38B) aufweist, sich über eine Strecke über die freien Enden (46) des bewegbaren Umfangs-Stützarms (18) in der Eingriffsrichtung (D) hinaus erstrecken.

2. Drehschneidevorrichtung (10) nach Anspruch 1, wobei der bewegbare Umfangs-Stützarm (18), der erste schwenkbare Arm (32A) und der zweite schwenkbare Arm (32B) eine C-Form definieren, wobei die erste Drehschneideeinheit (38A) und die zweite Drehschneideeinheit (38B) in Umfangsrichtung gesehen Enden der C-Form bilden.

3. Drehschneidevorrichtung (10) nach Anspruch 1 oder 2, wobei sowohl in der Schneideposition als auch in der eingefahrenen Position des ersten und zweiten schwenkbaren Arms (32A, 32B) die Öffnung (43) nicht durch den bewegbaren Umfangs-Stützarm (18) oder durch die Umfangsführung (22) definiert ist.

4. Drehschneidevorrichtung (10) nach einem der vorangegangenen Ansprüche, wobei die Klemmanordnung umfasst:
- zumindest zwei schwenkbare Klemmarme (64), die über jeweilige Klemmarmgelenke (66) mit dem Stützrahmen verbunden sind, und
- eine Öse (95) oder einen Haken zum Aufhängen der Drehschneidevorrichtung,
wobei in der Seitenansicht zumindest zwei schwenkbare Klemmarme (64) auf einer gegenüberliegenden Seite der Umfangsführung (22), des bewegbaren Umfangs-Stützarms (18) und der Öse oder des Hakens (95) als erste, zweite und dritte Drehschneideeinheit (38A, 38B, 38C) angeordnet sind.

5. Drehschneidevorrichtung (10) nach einem der vorangegangenen Ansprüche, wobei die Klemmanordnung (16) zumindest einen ersten Satz (80) und einen zweiten Satz (81) von schwenkbaren Klemmarmen (64) umfasst, wobei der erste Satz (80) und der zweite Satz (81) jeweils zumindest zwei schwenkbare Klemmarme (64) umfassen, die mit dem Stützrahmen über jeweilige Klemmarmgelenke (66) verbunden sind,
wobei ein Klemmschuh (68A, 68B) an einem freien Ende (70) eines jeden schwenkbaren Klemmarms angebracht ist, wobei die Klemmanordnung Klemmbetätiger (72) zum Schwenken der schwenkbaren Klemmenarme relativ zu der Hauptlängsachse über einen radialen Abstand zwischen einer eingefahrenen Position und einer Greifposition, in der die Klemmschuhe die Rohrleitung greifen, umfasst, wobei die Klemmbetätiger hydraulische oder pneumatische Zylinder oder elektrische, pneumatische oder hydraulische Drehantriebe sind,
wobei die Klemmenarme (64) des ersten Satzes (80) in einem axialen Abstand (A2) von den Klemmenarmen (64) des zweiten Satzes (81) positioniert sind.

6. Drehschneidevorrichtung nach einem der vorangegangenen Ansprüche, wobei der bewegbare Umfangs-Stützarm in einer Umfangsrichtung um die Hauptlängsachse über einen Winkel von mindestens 100 Grad bewegbar ist.

7. Drehschneidevorrichtung nach einem der vorangegangenen Ansprüche, wobei der erste und der zweite Schwenkpunkt an gegenüberliegenden ersten und zweiten freien Enden (46) des Umfangs-Stützarms angeordnet sind, wobei das erste und das zweite Schneidemesser an den jeweiligen freien Enden (48) des ersten und des zweiten drehbaren Arms angebracht sind, und wobei das dritte Schneidemesser in der Schneideposition eine zentrale Position relativ zu dem ersten und dem zweiten freien Ende (46) des bewegbaren Umfangs-Stützarms (18) aufweist.

8. Drehschneidevorrichtung nach einem der vorangegangenen Ansprüche, wobei sich in der Schneideposition des ersten und zweiten Arms die freien Enden des ersten und des zweiten Arms nicht berühren und eine Öffnung von 10 - 120 Grad um die Hauptlängsachse in der Drehschneidevorrichtung verbleibt, wobei die Öffnung gegenüber dem Umfangs-Stützarm angeordnet ist.

9. Drehschneidevorrichtung nach einem der vorangegangenen Ansprüche, wobei die Klemmanordnung zumindest zwei schwenkbare Klemmarme (64) umfasst, die über jeweilige Klemmarmgelenke (66) mit dem Stützrahmen verbunden sind, wobei ein Klemmschuh (68A, 68B) an einem freien Ende (70) jedes schwenkbaren Klemmarms angebracht ist, wobei die Klemmanordnung Klemmbetätiger (72) zum Schwenken der schwenkbaren Klemmenarme relativ zu der Hauptlängsachse über eine radiale Strecke zwischen einer eingefahrenen Position und einer Greifposition, in der die Klemmschuhe die Rohrleitung greifen, umfasst, wobei die Klemmbetätiger hydraulische oder pneumatische Zylinder oder elektrische, pneumatische oder hydraulische Drehantriebe sind.

10. Drehschneidevorrichtung nach einem der vorangegangenen Ansprüche, wobei die Klemmanordnung zumindest einen oberen Klemmschuh (68C) umfasst, der über einen Einstellmechanismus (90) zum Einstellen einer Position des oberen Klemmschuhs relativ zu dem Stützrahmen für unterschiedliche Durchmesser der Rohrleitung an dem Rahmen angebracht ist.

11. Anordnung einer Drehschneidevorrichtung nach einem der vorangegangenen Ansprüche und einer Hebevorrichtung, beispielsweise einem Kran, wobei die Drehschneidevorrichtung eine Öse (95) oder einen Haken umfasst und über eine mit der Öse oder dem Haken verbundene Leine (96) an dem Kran aufgehängt ist.

12. Anordnung aus einer Drehschneidevorrichtung nach einem der vorangegangenen Ansprüche und einem oder mehreren separaten Sätzen von Klemmschuhen, wobei die Klemmschuhe eine unterschiedliche Krümmung zum Einklemmen einer Rohrleitung mit einem unterschiedlichen Durchmesser aufweisen.

13. Verfahren zum Schneiden einer Rohrleitung mit der Drehschneidevorrichtung nach einem der vorangegangenen Ansprüche, wobei das Verfahren umfasst:
- Positionieren der Drehschneidevorrichtung (10) an der Rohrleitung, insbesondere durch Bewegen der Drehschneidevorrichtung in einer Eingriffsrichtung (D) relativ zur Rohrleitung,
- Einklemmen der Rohrleitung mit der Klemmanordnung (16),
- Schwenken des ersten und zweiten schwenkbaren Arms in die Schneideposition, um das erste und zweite Schneidemesser in die Rohrleitung eingreifen zu lassen, wobei der bewegbare Umfangs-Stützarm und der erste und zweite schwenkbare Arm eine C-Form um die Rohrleitung herum definieren,
- Schwenken des dritten Arms der dritten schwenkbaren Schneideanordnung (30C) in die Schneideposition, um die dritte Schneideklinge in die Rohrleitung eingreifen zu lassen,
- Drehen des ersten, zweiten und dritten Schneidemessers und Durchführen von Schnitten durch eine Wand (99) der Rohrleitung,
- Bewegen des beweglichen Umfangs-Stützarms (18) in einer Umfangsrichtung über einen Umfangswinkel relativ zu dem Stützrahmen entlang der Umfangsbahn und dadurch Erweitern der Schnitte in der Rohrleitung, bis die Schnitte aufeinandertreffen und zu einem vollständig umlaufenden Schnitt führen,
- Schwenken des ersten und zweiten schwenkbaren Arms zurück in die eingefahrene Position, und Schwenken des dritten Arms zurück in die eingefahrene Position,
- Drehen des Umfangs-Stützarms (18) zurück in seine Ausgangsposition,
- Lösen der Klemmanordnung von der Rohrleitung,
- Entfernen der Drehschneidevorrichtung von der Rohrleitung.

14. Verfahren nach Anspruch 13, wobei die Drehschneidevorrichtung an einem Kran aufgehängt ist, wobei das Verfahren das Herablassen der Drehschneidevorrichtung auf die Rohrleitung umfasst.

15. Verfahren nach einem der Ansprüche 13 und 14, wobei die erste, zweite und dritte Schneidklinge um die Hauptlängsachse herum im Wesentlichen gleichwinklig beabstandet sind, und wobei der Umfangs-Stützarm während des Schneidens über einen Winkel von zumindest 120 Grad gedreht wird.

## Revendications

1. Dispositif de coupe rotatif (10) configuré pour couper un pipeline stationnaire (12) ayant un axe de tuyau principal (13), en particulier un pipeline enfoncé dans le sol, le dispositif de coupe rotatif comprenant :
- un cadre de support (14) sur lequel sont montées diverses parties du dispositif de coupe rotatif,
- un ensemble de serrage (16) monté sur le cadre de support, l'ensemble de serrage étant configuré pour serrer l'ensemble de coupe rotatif sur le pipeline dans une position fixe et dans une orientation fixe autour des axes X, Y et Z,
- un bras de support circonférentiel mobile (18) relié de manière mobile au cadre de support à une distance axiale (A1) de l'ensemble de serrage et étant mobile sur une trajectoire circonférentielle autour d'un axe longitudinal principal (20) par rapport au cadre de support, dans lequel l'axe longitudinal principal est aligné avec l'axe de tuyau,
dans lequel le cadre de support comprend un guide circonférentiel (22) s'étendant sur un angle circonférentiel pour guider le bras de support circonférentiel le long de sa trajectoire circonférentielle,
- un entraînement de bras de support (26) configuré pour déplacer le bras de support circonférentiel par rapport au cadre de support le long de sa trajectoire circonférentielle,
- un premier ensemble de coupe pivotant (30A) comprenant :
∘ un premier bras pivotant (32A) qui est relié par une première charnière (33A) à un premier point de pivotement (34A) au bras de support circonférentiel mobile et qui peut pivoter autour d'un premier axe de pivotement (35A) par rapport au bras de support circonférentiel mobile,
∘ un premier entraînement de bras (36A) pour faire pivoter le premier bras pivotant par rapport au bras de support circonférentiel mobile (18) entre une position rétractée et une position de coupe,
∘ une première unité de coupe rotative (38A) montée sur le premier bras pivotant, la première unité de coupe rotative comprenant une première lame rotative (39A) et un premier entraînement de lame (40A) pour faire tourner la première lame,
- un deuxième ensemble de coupe pivotant (30B) comprenant :
∘ un deuxième bras pivotant (32B) qui est relié par une deuxième charnière (33B) à un deuxième point de pivotement (34B) au bras de support circonférentiel mobile et qui peut pivoter autour d'un deuxième axe de pivotement (35B) par rapport au bras de support circonférentiel mobile,
∘ un deuxième entraînement de bras (36B) pour faire pivoter le deuxième bras pivotant par rapport au bras de support circonférentiel mobile (18) entre une position rétractée et une position de coupe,
∘ une deuxième unité de coupe rotative (38B) montée sur le deuxième bras pivotant, la deuxième unité de coupe rotative comprenant une deuxième lame rotative (39B) et un deuxième entraînement de lame (40B) pour faire tourner la deuxième lame,
- un troisième ensemble de coupe pivotant (30C) comprenant :
∘ un troisième bras pivotant (32C) qui est relié par une troisième charnière (33C) en un troisième point de pivotement (34C) au bras de support circonférentiel mobile et qui peut pivoter autour d'un troisième axe de pivotement (35C) par rapport au bras de support circonférentiel mobile, dans lequel le troisième point de pivotement est situé entre le premier et le deuxième point de pivotement sur le bras de support circonférentiel mobile,
∘ un troisième entraînement de bras (36C) pour faire pivoter le troisième bras pivotant par rapport au bras de support circonférentiel mobile (18) entre une position rétractée et une position de coupe,
∘ une troisième unité de coupe rotative (38C) montée sur l'extrémité libre du troisième bras pivotant, la troisième unité de coupe rotative comprenant une troisième lame rotative (39C) et un troisième entraînement de lame (40C) pour faire tourner la troisième lame,
dans lequel, lorsque les premier et deuxième bras pivotants sont dans la position rétractée, une ouverture (43) est définie qui permet au dispositif de coupe rotatif d'être positionné contre le pipeline et d'être serré contre le pipeline avec l'ensemble de serrage, dans lequel, lorsque les premier et deuxième bras sont dans la position de coupe, le bras de support circonférentiel mobile et les premier et deuxième bras pivotants définissent une forme de C autour du pipeline,
dans lequel, lorsque le premier, le deuxième et le troisième bras sont en position de coupe, la première, la deuxième et la troisième lames de coupe sont espacées à des intervalles circonférentiels autour de l'axe longitudinal principal,
dans lequel le dispositif de coupe rotatif est configuré pour, lorsque les première, deuxième et troisième lames de coupe sont dans la position de coupe, déplacer le bras de support circonférentiel mobile dans une direction circonférentielle le long de sa trajectoire circonférentielle, dans lequel, pendant ce mouvement, chaque lame de coupe est déplacée sur un même angle circonférentiel, et dans lequel les première, deuxième et troisième lames de coupe font une coupe de 360 degrés dans le pipeline,
dans lequel le dispositif de coupe rotatif (10) est configuré pour être positionné contre le pipeline en déplaçant le dispositif de coupe rotatif (10) par rapport au pipeline dans une direction d'engagement (D),
**caractérisé en ce que** le premier bras pivotant (32A) comprenant la première unité de coupe rotative (38A) et le deuxième bras pivotant (32B) comprenant la deuxième unité de coupe rotative (38B) s'étendent sur une distance au-delà des extrémités libres (46) du bras de support circonférentiel mobile (18) dans la direction d'engagement (D).

2. Dispositif de coupe rotatif (10) selon la revendication 1, dans lequel le bras de support circonférentiel mobile (18), le premier bras pivotant (32A) et le deuxième bras pivotant (32B) définissent une forme en C, dans lequel la première unité de coupe rotative (38A) et la deuxième unité de coupe rotative (38B) forment des extrémités de la forme en C lorsqu'elles sont vues dans la direction circonférentielle.

3. Dispositif de coupe rotatif (10) selon la revendication 1 ou 2, dans lequel à la fois dans la position de coupe et dans la position rétractée des premier et deuxième bras pivotants (32A, 32B), l'ouverture (43) n'est pas définie par le bras de support circonférentiel mobile (18) ou par le guide circonférentiel (22).

4. Dispositif de coupe rotatif (10) selon l'une quelconque des revendications précédentes, dans lequel l'ensemble de serrage comprend :
au moins deux bras de serrage pivotants (64) qui sont reliés au cadre de support par des charnières (66) respectives de bras de serrage, et
un œillet (95) ou un crochet pour suspendre le dispositif de coupe rotatif,
dans lequel, en vue latérale, au moins deux bras de serrage pivotants (64) sont positionnés sur des côtés opposés du guide circonférentiel (22), du bras de support circonférentiel mobile (18) et de l'œillet ou du crochet (95) en tant que première, deuxième et troisième unités de coupe rotative (38A, 38B, 38C).

5. Dispositif de coupe rotatif (10) selon l'une quelconque des revendications précédentes, dans lequel l'ensemble de serrage (16) comprend au moins un premier ensemble (80) et un deuxième ensemble (81) de bras de serrage pivotants (64), chacun du premier ensemble (80) et du deuxième ensemble (81) comprenant au moins deux bras de serrage pivotants (64) qui sont reliés au cadre de support par des charnières de bras de serrage respectives (66),
dans lequel un sabot de serrage (68A, 68B) est monté sur une extrémité libre (70) de chaque bras de serrage pivotant, l'ensemble de serrage comprenant des actionneurs de serrage (72) pour faire pivoter les bras de serrage pivotants par rapport à l'axe longitudinal principal sur une distance radiale entre une position rétractée et une position de saisie dans laquelle les sabots de serrage saisissent le pipeline, les actionneurs de serrage étant des cylindres hydrauliques ou pneumatiques ou des entraînements rotatifs électriques, pneumatiques ou hydrauliques,
dans lequel les bras de serrage (64) du premier ensemble (80) sont positionnés à une distance axiale (A2) des bras de serrage (64) du deuxième ensemble (81).

6. Dispositif de coupe rotatif selon l'une quelconque des revendications précédentes, dans lequel le bras de support circonférentiel mobile est mobile dans une direction circonférentielle autour de l'axe longitudinal principal sur un angle d'au moins 100 degrés.

7. Dispositif de coupe rotatif selon l'une quelconque des revendications précédentes, dans lequel les premier et deuxième points de pivotement sont situés à des première et deuxième extrémités libres (46) opposées du bras de support circonférentiel, dans lequel les première et deuxième lames de coupe sont montées à des extrémités libres (48) respectives des premier et deuxième bras pivotants, et dans lequel, dans la position de coupe, la troisième lame de coupe a une position centrale par rapport aux première et deuxième extrémités libres (46) du bras de support circonférentiel mobile (18).

8. Dispositif de coupe rotatif selon l'une quelconque des revendications précédentes, dans lequel, dans la position de coupe du premier et du deuxième bras, les extrémités libres du premier et du deuxième bras ne se rencontrent pas et une ouverture reste de 10 à 120 degrés autour de l'axe longitudinal principal dans le dispositif de coupe rotatif, l'ouverture étant située à l'opposé du bras de support circonférentiel.

9. Dispositif de coupe rotatif selon l'une quelconque des revendications précédentes, dans lequel l'ensemble de serrage comprend au moins deux bras de serrage (64) pivotants qui sont reliés au cadre de support par des charnières de bras de serrage (66) respectives, dans lequel un sabot de serrage (68A, 68B) est monté sur une extrémité libre (70) de chaque bras de serrage pivotant, l'ensemble de serrage comprenant des actionneurs de serrage (72) pour faire pivoter les bras de serrage pivotants par rapport à l'axe longitudinal principal sur une distance radiale entre une position rétractée et une position de saisie dans laquelle les sabots de serrage saisissent le pipeline, les actionneurs de serrage étant des cylindres hydrauliques ou pneumatiques ou des entraînements rotatifs électriques, pneumatiques ou hydrauliques.

10. Dispositif de coupe rotatif selon l'une quelconque des revendications précédentes, dans lequel l'ensemble de serrage comprend au moins un sabot de serrage supérieur (68C) qui est monté sur le cadre par l'intermédiaire d'un mécanisme de réglage (90) pour régler une position du sabot de serrage supérieur par rapport au cadre de support pour différents diamètres du pipeline.

11. Assemblage d'un dispositif de coupe rotatif selon l'une quelconque des revendications précédentes et d'un dispositif de levage, par exemple une grue, dans lequel le dispositif de coupe rotatif comprend un œillet (95) ou un crochet et est suspendu à la grue via une ligne (96) reliée à l'œillet ou au crochet.

12. Assemblage d'un dispositif de coupe rotatif selon l'une quelconque des revendications précédentes et d'un ou plusieurs jeux séparés de sabots de serrage, les sabots de serrage ayant une courbure différente pour serrer un pipeline de diamètre différent.

13. Procédé de coupe d'un pipeline avec le dispositif de coupe rotatif selon l'une quelconque des revendications précédentes, le procédé comprenant :
- le positionnement du dispositif de coupe rotatif (10) au niveau du pipeline, notamment en déplaçant le dispositif de coupe rotatif dans une direction d'engagement (D) par rapport au pipeline,
- le serrage du pipeline avec l'ensemble de serrage (16),
- le pivotement des premier et deuxième bras pivotants vers la position de coupe afin de laisser les première et deuxième lames de coupe s'engager dans le pipeline, dans lequel le bras de support circonférentiel mobile et les premier et deuxième bras pivotants définissent une forme en C autour du pipeline,
- le pivotement du troisième bras du troisième ensemble de coupe pivotant (30C) vers la position de coupe afin de laisser la troisième lame de coupe s'engager dans le pipeline,
- le rotation des première, deuxième et troisième lames de coupe et la réalisation des coupes à travers une paroi (99) du pipeline,
- le déplacement du bras de support circonférentiel mobile (18) dans une direction circonférentielle sur un angle circonférentiel par rapport au cadre de support le long de la trajectoire circonférentielle et étendre ainsi les coupes dans le pipeline jusqu'à ce que les coupes se rencontrent et donnent lieu à une coupe circonférentielle complète,
- le pivotement des premier et deuxième bras pivotants vers la position rétractée, et le pivotement du troisième bras vers la position rétractée,
- le pivotement du bras de support circonférentiel (18) pour le ramener à sa position initiale,
- la libération de l'ensemble de serrage du pipeline,
- le retrait du dispositif de coupe rotatif du pipeline.

14. Procédé selon la revendication 13, dans lequel le dispositif de coupe rotatif est suspendu à une grue, le procédé comprenant la descente du dispositif de coupe rotatif sur le pipeline.

15. Procédé selon l'une quelconque des revendications 13 et 14, dans lequel la première, la deuxième et la troisième lames de coupe sont espacées de manière sensiblement équiangulaire autour de l'axe longitudinal principal, et dans lequel le bras de support circonférentiel est tourné sur un angle d'au moins 120 degrés pendant la coupe.
